(19) **Europäisches Patentamt / European Patent Office / Office européen des brevets**

(11) **EP 2 450 833 A1**

(12) **EUROPEAN PATENT APPLICATION**

(43) Date of publication:
**09.05.2012 Bulletin 2012/19**

(51) Int Cl.:
*G06K 9/46* (2006.01) *G06F 17/30* (2006.01)

(21) Application number: **11195008.5**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.01.2007 GB 0700468**

(62) Document number(s) of the earlier application(s) in accordance with Art. 76 EPC:
**07858778.9 / 2 126 789**

(71) Applicants:
- **Mitsubishi Electric Information Technology Centre**
  **Europe B.V.**
  **Guildford**
  **Surrey GU2 7YD (GB)**
  Designated Contracting States:
  **GB**
- **Mitsubishi Electric Corporation**
  **Chiyoda-ku**
  **Tokyo 100-8310 (JP)**
  Designated Contracting States:
  **AT BE BG CH CY CZ DE DK EE ES FI FR GR HU IE IS IT LI LT LU LV MC MT NL PL PT RO SE SI SK TR**

(72) Inventors:
- **Brasnett, Paul**
  **Surbiton, Surrey KT5 8JW (GB)**
- **Bober, Miroslaw**
  **Guildford, Surrey GU1 2SE (GB)**

(74) Representative: **Whitlock, Holly Elizabeth Ann**
**R.G.C. Jenkins & Co**
**26 Caxton Street**
**London SW1H 0RJ (GB)**

Remarks:
This application was filed on 21-12-2011 as a divisional application to the application mentioned under INID code 62.

(54) **Improved image identification**

(57) A method and apparatus for deriving a representation of an image by processing signals corresponding to the image is described. The method includes deriving a two-dimensional function (T(d, θ)), such as a Trace transform of the image, and decomposing, for instance by sub-sampling, the two-dimensional function (T(d, θ)) in at least one of its two dimensions, to obtain a reduced resolution Trace transform. The decomposed, two dimensional function is then used to derive the representation of the image.

Figure 3

**Description**

**BACKGROUND OF THE INVENTION**

**Field of the Invention**

The present invention relates to a method and apparatus for representing an image, and, in addition, a method and apparatus for comparing or matching images, for example, for the purposes of searching or validation.

**Description of the Background Art**

This invention relates to improvements upon the image identification technique described in co-pending European patent application EP 06255239.3. The contents of EP 06255239.3 are incorporated herein by reference. Details of the invention and embodiments in EP 06255239.3 apply analogously to the present invention and embodiments.

The image identification method and apparatus described in EP 06255239.3, which extracts a short binary descriptor from an image (see Fig. 2), addresses many drawbacks of the prior art, and in particular is characterised by:

- reduced computational complexity for both feature extraction and matching,
- reduced the image descriptor size,
- increased robustness to various image modifications, and
- reduced false alarm rate to 1ppm level while maintaining detection rate of approximately ~80% for a wide range of modifications.

However, in practical applications higher detection rates are desirable. in particular, it would be desirable to increase the average detection rate to above 98%, and also to significantly improve robustness to noise and histogram equalisation modifications.

**SUMMARY OF THE INVENTION**

According to a first aspect, the present invention provides a method of deriving a representation of an image as defined in accompanying claim 1.

Further aspects of the present invention include use of a representation of an image derived using a method according to a the first aspect of the present invention, an apparatus for performing the method according to the first aspect of the present invention, and computer-readable storage medium comprising instructions which, when executed, perform the method according to the first aspect of the present invention.

Preferred and optional features of embodiments of the present invention are set out in the dependent claims.

The present invention concerns a new method of extracting visual identification features from the Trace transform of an image (or an equivalent two-dimensional function of the image). The method may be used to create a multi-resolution representation of an image by performing region-based processing on the Trace transform of the image, prior to extraction of the identifier e.g. by means of the magnitude of the Fourier Transform.

In the present application, the term "functional" has its normal mathematical meaning. In particular, a functional is a real-valued function on a vector space V, usually of functions. In the case of the Trace transform, functionals are applied over lines in the image.

In the method described in co-pending patent application EP 06255239.3 the Trace transform is computed by tracing an image with straight lines along which certain functional T of the image intensity or colour function are calculated. Different functionals $T$ are used to produce different Trace transforms from a single input image. Since in the 2D plane a line is characterised by two parameters, distance $d$ and angle $\theta$, a Trace transform of the image is a 2D function of the parameters of each tracing line. Next, the "circus function" is computed by applying a diametrical functional P along the columns of the Trace transform. A frequency representation of the circus function is obtained (e.g. a Fourier transform) and a function is defined on the frequency amplitude components and its sign is taken as a binary descriptor.

A method according to embodiments of the present invention may use similar techniques to derive a representation of an image. However, a reduced resolution function of the image is derived, such as a reduced resolution Trace transform, prior to performing further steps to derive the representation of the image (e.g. binary descriptor). The reduction in resolution should preserve the essential elements that are unique to the image (i.e. its visual identification features), whilst reducing the quantity of data for processing. Typically, the derived reduced resolution function of the image, incorporates, by processing, representative values for selected or sampled parts of the image, as will be apparent from the description below.

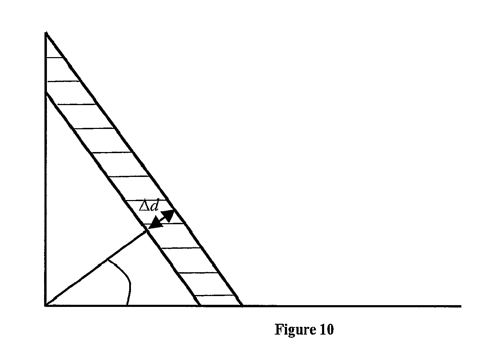

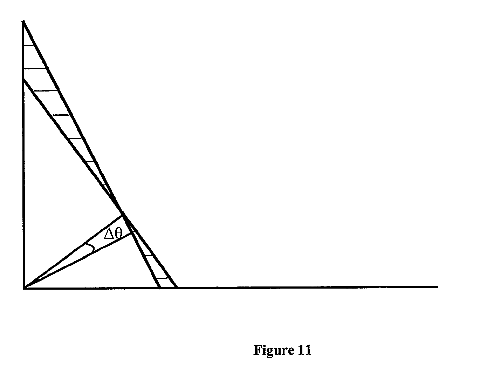

According to one embodiment of the present invention, the reduced resolution function of the image is derived by tracing the image with sets of lines, where the parameters of these lines are of a predetermined interval $\Delta d$ and/or $\Delta\theta$, and deriving a Trace transform (or equivalent) using all of the sets of lines (instead of all lines across the image). The lines may correspond to strips (as illustrated in Fig. 10) and/or double cones (as illustrated in Fig 11) in the image domain. A reduced resolution (i.e. coarser resolution) Trace transform of the image is thus derived, as described in more detail below.

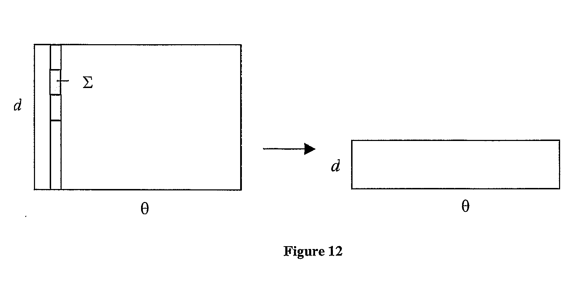

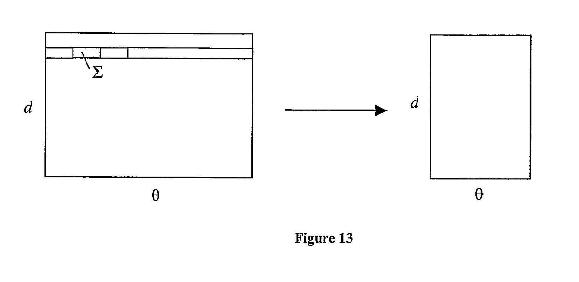

According to another embodiment of the present invention, the Trace transform (or equivalent) is first derived in the conventional manner, by tracing all lines across the image. The Trace transform of the image is then traced with strips at different values of the angle parameter $\theta$, and resolution reduction is performed over intervals of the distance parameter $d$ (as illustrated in Fig. 12) and/or the Trace transform is traced with strips at different values of the distance parameter $d$, and resolution reduction is performed over intervals of the angle parameter $\theta$ (as illustrated in Fig. 13) in the Trace domain to derive a reduced resolution two dimensional function of the image, as described in more detail below.

Advantageously, the method of this embodiment of the present invention can be implemented very efficiently by implicitly computing the Trace transform values along strips and/or cones in the Trace transform domain, as explained in further detail below.

As in the method disclosed in co-pending patent application EP 06255239.3, a method according to an embodiment of the present invention combines selected fragments from a 'family' of identifiers obtained by using different functionals. In addition, in some embodiments, identifiers obtained with strips and/or double cones are combined into a single descriptor. In addition, strips of different width and/or cones of different opening angle are used, in some embodiments, to obtain a multi-resolution representation.

## BRIEF DESCRIPTION OF THE DRAWINGS

Embodiments of the invention will be described with reference to the accompanying drawings, of which:

Fig. 1a shows an image;
Fig. 1b shows a reduced version of the image of Fig. 1a;
Fig. 1c shows a rotated version of the image of Fig. 1a;
Fig. 1d shows a blurred version of the image of Fig. 1a;

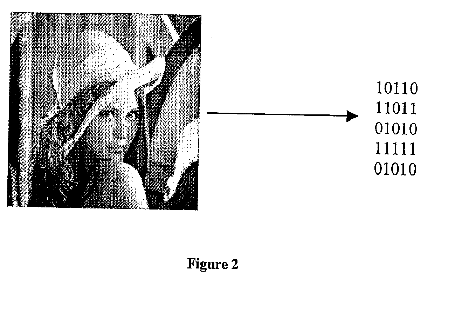

Fig. 2 shows an image and a bit string representation of the image according to the prior art;
Fig. 3 is a diagram illustrating steps of a method of an embodiment of the invention;
Fig. 4 is a diagram illustrating steps of another method of an embodiment of the invention;
Fig. 5 is a diagram illustrating the line parameterisation for the trace transform;
Figs. 6a-c illustrate functions derived from different versions of an image;
Fig. 7 is a block diagram of an apparatus according to an embodiment of the invention;
Fig. 8 is a block diagram illustrating an embodiment using multiple trace transforms;
Fig. 9 illustrates bit stream produced according to the embodiment of Fig. 8.
Fig. 10 illustrates the interval strips in the original image when decomposing the $d$-parameter of trace transform.
Fig. 11 illustrates the double-cones in the original image when decomposing the $\theta$-parameter of trace transform.
Fig. 12 illustrates the decomposition of the trace transform in the $d$-parameter.
Fig. 13 illustrates the decomposition of the trace transform in the $\theta$-parameter.

## DETAILED DESCRIPTION OF THE EMBODIMENTS

Various embodiments for deriving a representation of an image, specifically an image identifier, and using such a representation/identifier for the purposes of, for example, identification, matching or validation of an image or images, will be described below. The present invention is especially useful for, but is not restricted to, identifying an image. In the described embodiments, an "image identifier" (sometimes simply "identifier") is an example of a representation of an image and the term is used merely to denote a representation of an image, or descriptor.

The skilled person will appreciate that the specific design of an image identification apparatus and method, according to an embodiment of the present invention, and the derivation of an image identifier for use in image identification, is determined by design requirements. Such design requirements relate to the type of image modifications that the image identifier should be robust to, the size of the identifier, extraction and matching complexity, target false-alarm rate, etc.

The following embodiment illustrates a generic design that results in an identifier that is robust to the following modifications to an image (this is not an exhaustive list):

- Colour reduction,
- Blurring,

- Brightness Change,
- Flip (left-right & top-bottom),
- Greyscale Conversion,
- Histogram Equalisation,
- JPEG Compression,
- Noise,
- Rotation and
- Scaling.

It has been found that this generic design typically can achieve a very low false-alarm rate of 1 part per million (ppm) on a broad class of images.

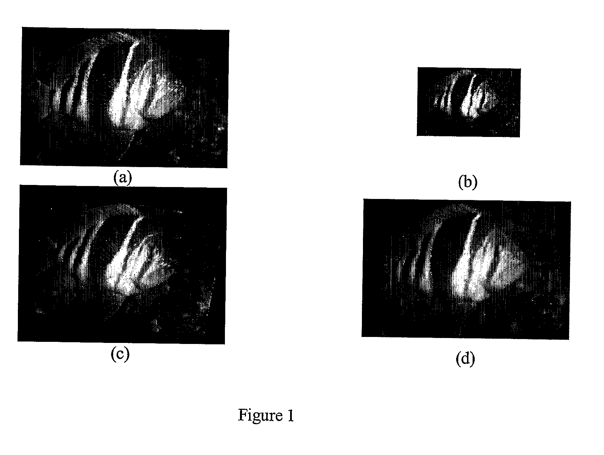

Fig. 1 shows an example of an image and modified versions of the image. More specifically, Fig. 1a is an original image, Fig. 1b is a reduced version of the image of Fig. 1a, Fig. 1c is a rotated version of the image of Fig. 1a, and Fig. 1d is a blurred version of the image of Fig. 1a.

An embodiment of the invention derives a representation of an image, and more specifically, an image identifier, by processing signals corresponding to the image.

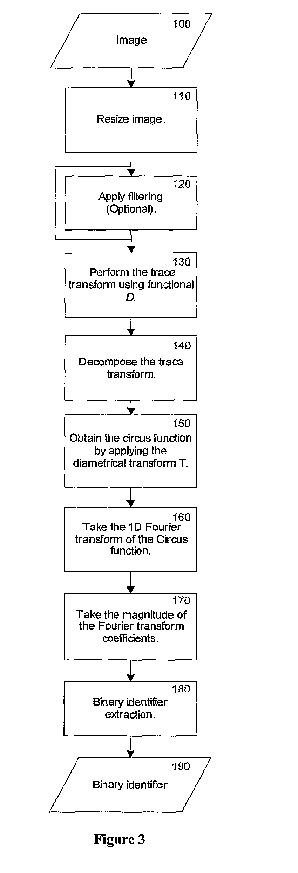

Fig. 3 shows steps of a method of deriving an image identifier according to an embodiment of the invention, that is, an identifier extraction process.

In the initial stage of extraction, the image is pre-processed by resizing (step 110) and optionally filtering (step 120). The resizing step 110 is used to normalise the images before processing. The step 120 can comprise of filtering to remove effects such as aliasing caused by any processing performed on the image and/or region selection rather than using the full original image. In a preferred embodiment of the method, a circular region is extracted from the centre of the image for further processing.

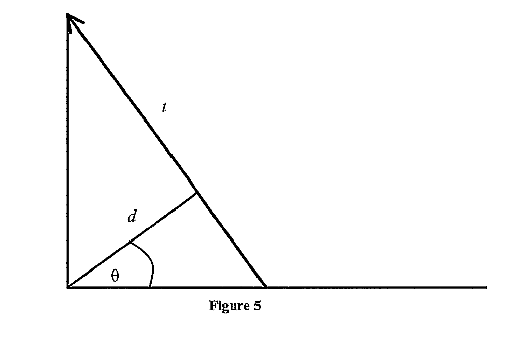

In step 130, a Trace transform $\mathbf{T}(d, \theta)$ is performed. The trace transform projects all possible lines over an image and applies one or more functionals over these lines. As previously stated, a functional is a real-valued function on a vector space V, usually of functions. In the case of the Trace transform a functional is applied over lines in the image. As shown in Fig. 5, a line is parameterised by two parameters, $d$ and $\theta$. The result of the Trace transform may be decomposed to reduce the resolution thereof, as described below, in step 140. In step 150, a further functional can then be applied to the columns of the trace transform to give a vector of real numbers. This second functional is known as the diametrical functional and the resulting vector is known as the circus function. A third functional, the circus functional, can be applied to the circus function to give a single number. The properties of the result can be controlled by appropriate choices of the three different functionals (trace, diametrical and circus). Full details of the Trace transform, including examples of images and corresponding trace transforms, can be found, for example, in reference [1] *infra:* Alexander Kadyrov and Maria Petrou, "The Trace Transform and its Applications", IEEE Trans. PAMI, 23 (8), Aug., 2001, pp 811-828., which is incorporated herein by reference. In the method of this embodiment, only the first two steps are taken in the Trace transform to obtain a 1D circus function.

In one particular example of the method, the Trace transform $\mathbf{T}(d, \theta)$ of an image is extracted with the trace functional $T$

$$\int \xi(t)dt, \qquad\qquad (1)$$

and the circus function is obtained by applying the diametrical functional P

$$\max(\xi(t)). \qquad\qquad (2)$$

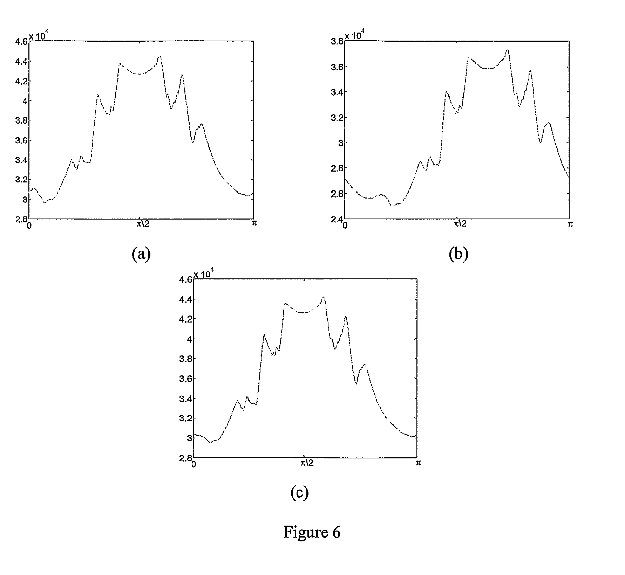

Examples of how the circus function is affected by different image processing operations can be seen in Fig. 6, which shows the circus function corresponding to different versions of an image. Fig. 6(a) corresponds to an original image; Fig. 6(b) corresponds to a rotated version of the image and Fig. 6(c) corresponds to a blurred version of the image. It can be seen that rotation shifts the function (as well as causing a scale change).

It can be shown that for the majority of image modification operations listed above, and with a suitable choice of functionals $T, P,$ the circus function $f(a)$ of image $a$ is only ever a shifted or scaled (in amplitude) version of the circus function $f(a')$ of the modified image $a'$ (see Section 3 of reference [1] *infra*).

$$f(a') = \kappa f(a - \theta). \tag{3}$$

According to the method described in co-pending European patent application EP 06255239.3, frequency components of a frequency representation of the circus function may be used to derive an image identifier. It will be appreciated that other techniques for deriving an image descriptor are possible, and may be used in conjunction with the present invention. In one example, the image identifier may be derived from a Fourier Transform (or equally a Haar Transform) of the circus function.

Thus, by taking the Fourier transform of equation (3) gives:

$$F(\Phi) = F[\kappa f(a - \theta)], \tag{4}$$

$$= \kappa F[f(a - \theta)], \tag{5}$$

$$= \kappa \exp^{-j\theta\Phi} F[f(a)]. \tag{6}$$

Then taking the magnitude of equation (6) gives

$$|F(\Phi)| = |\kappa F[f(a)]|. \tag{7}$$

From equation (7) it can be seen that the modified image and original image are now equivalent except for the scaling factor $\kappa$.

According to the example, a function $c(\omega)$ is now defined on the magnitude coefficients of a plurality of Fourier transform coefficients. One illustration of this function is taking the difference between each coefficient and its neighbouring coefficient

$$c(\omega) = |F(\omega)| - |F(\omega + 1)| \tag{8}$$

A binary string can be extracted by applying a threshold to the resulting vector (equation 8) such that

$$b_\omega = \begin{cases} 0, c(\omega) < 0 \\ 1, c(\omega) >= 0 \end{cases} \quad \text{for all } \omega, \tag{9}$$

The image identifier is then made up of these values $B = \{b_0, ..., b_n\}$.

To perform identifier matching between two different identifiers $B_1$ and $B_2$, both of length $N$, the normalised Hamming distance is taken

$$H(B_1, B_2) = \frac{1}{N} \sum_N B_1 \otimes B_2, \tag{10}$$

where $\otimes$ is the exclusive OR (XOR) operator. Other methods of comparing identifiers or representations can be used.

The performance may be further improved by selection of certain bits in the identifier. The bits corresponding to the lower frequencies are generally more robust and the bits corresponding to the higher frequencies are more discriminating. In one particular embodiment of the invention the first bit is ignored and then the identifier is made up of the next 64 bits.

In accordance with one embodiment of the present invention, step 140 of decomposing the two dimensional function of the image, resulting from the Trace transform (or equivalent) involves reducing the resolution thereof. The reduced resolution may be achieved by processing in either of its two dimensions, $d$ or $\theta$, or in both dimensions.

Thus, the resolution may be reduced in the distance dimension in the "Trace-domain" by sub-sampling the $d$-parameter e.g. by summing or integrating over intervals for $d$ along the columns (corresponding to values for $\theta$), as in Fig. 12. This corresponds to projecting strips of width $\Delta d$ over the image (i.e. in the image domain) during the Trace transform, as shown in Fig. 10. It will be appreciated that any technique for sub-sampling, that is reducing the resolution of the Trace transform, over intervals for the distance parameter $d$ may be used. Thus, any statistical calculation that reduces the quantity of data whilst preserving the essence of the data, may be used, of which summing and integration are merely examples.

Alternatively, or additionally, the resolution may be reduced in the angle dimension in the "Trace domain" by sub-sampling the $\theta$ parameter e.g. by summing or integrating over intervals for $\theta$ along the rows (corresponding to values for $d$), as in Fig. 13. This is approximately equivalent to projecting double cones with opening-angle $\Delta\theta$ over the image (i.e. in the image domain) during the Trace transform, as shown Fig. 11. It will be appreciated that any technique for sub-sampling, that is reducing the resolution of the Trace transform, over intervals for the angle parameter $\theta$ may be used. Thus, any statistical calculation that reduces the quantity of data whilst preserving the essence of the data, may be used, of which summing and integration are merely examples.

In accordance with another embodiment of the present invention, the step 140 of decomposing could be performed in the "image domain" i.e. after step 120 and typically in combination with step 130 of Fig. 3. In one example, step 140 would combine or decompose sets of lines in the image itself, and perform a Trace transform (or other operation) over these lines to derive an image identifier. For example, lines of the image of one pixel width can be combined so that effectively multiple lines of the image can be processed together in step 130. The set of lines may be, for example, parallel lines and/or lines defined by double cones as shown in Fig. 10 and Fig. 11, respectively. The number of the lines combined corresponds to the interval described above. Thus, in this embodiment, the Trace transform is effectively modified to trace selected sets of lines across the image, instead of tracing all lines across the image, as in the conventional Trace transform.

As the skilled person will appreciate, other techniques for decomposing in the image domain are possible.

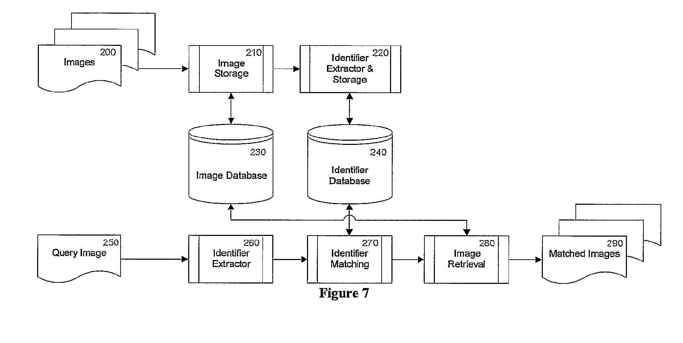

An example of an apparatus according to an embodiment of the invention for carrying the above methods is shown in Fig. 7. Specifically, images 200 are received by image storage module 210 and stored in image database 230. In addition, identifier extractor and storage module 220 extracts an image identifier for each received image, in accordance with the method of the present invention, and stores the image identifiers in identifier database 240, optionally together with other information relevant to image contents, as appropriate.

Fig. 7 additionally shows an apparatus embodying an image search engine that uses the image identifiers extracted using the above methods. Image verification or matching may be performed by an image search engine in response to receiving a query image 250. An image identifier for the query image 250 is extracted in identifier extractor module 260, in accordance with the method of the present invention. Identifier matching module 270 compares the image identifier for the query image 250 with the image identifiers stored in identifier database 240. Image retrieval module 280 retrieves matched images 290 from image database 230, the matched images 290 having the image identifiers matching the query image identifier, as discussed in more detail below.

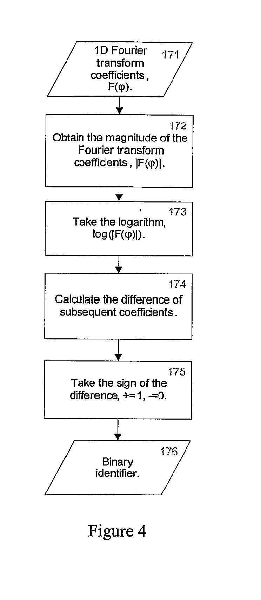

Fig. 4 shows an alternative method of defining a binary function on Fourier transform coefficients. In particular, after obtaining Fourier transform coefficients (step 171), the logarithm of the magnitude of a plurality of Fourier transform coefficients is obtained (steps 172 and 173). The difference of subsequent coefficients is calculated (step 174) similar to equation (8) above, following by taking the sign of the difference and assigning binary values according to the sign (step 175), which are then used to form the binary identifier. It will be appreciated that this technique can be used for frequency coefficients of other frequency representations of a function of the image, including a Haar Transform.

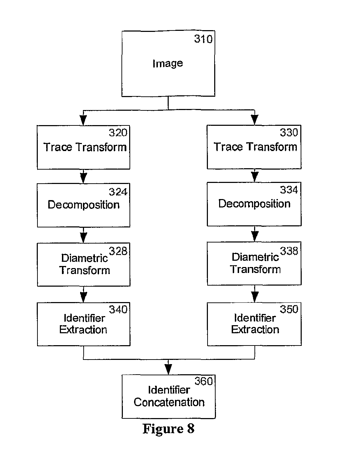

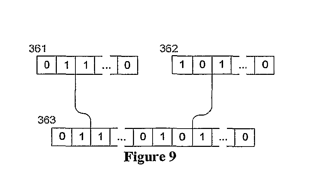

The basic identifier described previously can be improved by using multiple reduced resolution Trace transforms to derive respective identifiers and combining bits from the separate identifiers as shown in Figs. 8 and 9. The specific method for combining binary strings 361 and 362 from two separate reduced resolution Trace transforms is to concatenate them to obtain the identifier 363.

Good results may be obtained in this way by using the Trace functional T in equation (1) *supra* with the diametrical functional $P$ given by equation (2) *supra* for one binary string and then Trace functional (1) with the diametrical functional (11)

$$\int \left|\xi(t)'\right| dt, \qquad\qquad (11)$$

to obtain the second string. The first bit of each binary string is skipped and then the subsequent 64 bits from both strings are concatenated to obtain a 128 bit identifier.

Significant performance improvements may be obtained by using a multi-resolution representation of the Trace transform, in accordance with the present invention. In particular, decomposition may be performed in one or two dimensions. The diametrical functional can then be applied and the binary string extracted as previously. Typical results show that using the decomposition improves the detection rates at a false error rate of 1 part per million from around 80% to 98%.

This multi-resolution Trace transform may be created by sub-sampling an original Trace transform, to reduce its resolution, in either of its two dimensions, $d$ or $\theta$, or in both dimensions, as described above. In the "Trace-domain" sub-sampling the $d$-parameter is performed by e.g. integrating over intervals along the columns, as in Fig. 12. This corresponds to projecting strips of width $\Delta d$ over the image during the Trace transform, as shown in Figure 10. Sub-sampling can also take place by e.g. integrating over intervals in the $\theta$ parameter, that is along the rows, see Fig. 13. This is approximately equivalent to integrating over double-cones with opening-angle $\Delta\theta$ during the Trace transform, see Fig. 11. Alternatively, as described above these operations could be performed in the "image domain".

Multiple basic identifiers can be extracted from one Trace transform by using a multi-resolution decomposition, where sub-sampling takes place over a range of different interval widths to generate the multi-resolution representation composed of the multiple basic identifiers. Ideally, the multi-resolution representation uses multiple identifiers derived using a range of interval widths. For instance, each interval width may be at least a factor of two different from other interval widths. Good results were typically obtained by using a system, where the output of the trace transform is of size 600 x 384, and then the $d$-parameter is sub-sampled by integrating using bands of widths 8, 16, 32, 64 & 128, similarly the $\theta$-parameter is sub-sampled by e.g. integrating using bands of widths 3, 6, 12, & 24.

One application of the identifier is as an image search engine. A database is constructed by extracting and storing the binary identifier along with associated information such as the filename, the image, photographer, date and time of capture, and any other useful information. Then given a query image $a_q$ the binary identifier is extracted and is compared with all identifiers in the database $B_0 \dots B_M$. All images with a Hamming distance to the query image below a threshold are returned.

Alternative implementations

A range of different Trace and diametrical functionals can be used, for example (a non-exhaustive list) :

$$\int \xi(t) dt, \qquad\qquad (A1)$$

$$\left( \int \left|\xi(t)\right|^q dt \right)^r, \qquad \text{where q>0} \qquad\qquad (A2)$$

$$\int \left|\xi(t)'\right| dt, \qquad\qquad (A3)$$

$$\int (t - X1)^2 \xi(t) dt, \qquad \text{where} \quad X1 = \frac{\int t\xi(t) dt}{A1} \qquad\qquad (A4)$$

$$\sqrt{\frac{A4}{A1}}\ ,\tag{A5}$$

$$\max(\xi(t)),\tag{A6}$$

$$A6-\min(\xi(t))\ .\tag{A7}$$

Two or more identifiers can be combined to better characterise an image. The combination is preferably carried out by concatenation of the multiple identifiers.

For geometric transformations of higher order than rotation, translation and scaling the version of the identifier described above is not appropriate; the relationship in equation (3) does not hold. The robustness of the identifier can be extended to affine transformations using a normalisation process full details of which can be found in reference [2] *infra.* Two steps are introduced to normalise the circus function, the first involves finding the so called associated circus, then the second step involves finding the normalised associated circus function. Following this normalisation it is shown that the relationship in equation (3) is true. The identifier extraction process can now continue as before.

Some suitable Trace functionals for use with the normalisation process are given below in (G1) & (G2), a suitable choice for the diametrical functional is given in (G3).

$$T(g(t))=\int_{R^+}rg(r)dr,\tag{G1}$$

$$T(g(t))=\int_{R^+}r^2g(r)dr\ ,\tag{G2}$$

$$P(h(t))=\sum_k\left|h(t_{k+1})-h(t_k)\right|,\tag{G3}$$

where $r\equiv t\text{-}c$ , $c\equiv median(\{t_k\}_k,\{|g(t_k)|\}_k)$. The weighted median of a sequence $y_1$, $y_2$,..., $y_n$ with nonnegative weights $w_1$, $w_2$,..., $w_n$ is defined by identifying the maximal index m for which

$$\sum_{k<m}w_k\le\frac{1}{2}\sum_{k\le n}w_k\ ,\tag{12}$$

assuming that the sequence is sorted in ascending order according to the weights. If the inequality (12) is strict the median is $y_m$. However, if the inequality is an equality then the median is $(y_m+y_{m-1})/2$.

Rather than constructing the identifier from a continuous block of bits the selection can be carried out by experimentation. One example of how to do this is to have two sets of data i) independent images ii) original and modified images. The performance of the identifier can be measured by comparing the false acceptance rate for the independent data and false rejection rate for the original and modified images. Points of interest are the equal error rate or the false rejection rate at a false acceptance rate of $1\times10^{-6}$. The optimisation starts off with no bits selected. It is possible to examine each bit one at a time to see which bit gives the best performance (say in terms of the equal error rate or some similar measure). The bit that gives the best result should be selected. Then, all the remaining bits should be tested to find which gives the best performance in combination with the first bit. Again, the bit with the lowest error rate is selected. This procedure is repeated until all bits are selected. In this way, the bit combination that results in the overall best performance can be determined.

A multi-resolution decomposition of the trace transform can be formed as described above by summing or integrating over intervals of the parameter (either $d$ or $\theta$). As indicated above, any statistical technique can be used to achieve decomposition or resolution reduction and other possibilities include calculating statistics such as the mean, max, min etc. Other functionals may also be applied over these intervals.

Moreover, a structure could be applied to the identifier to improve search performance. For example a two pass search could be implemented, half of the bits are used for an initial search and then only those with a given level of accuracy are accepted for the second pass of the search.

The identifier can be compressed to further reduce its size using a method such as Reed-Muller decoder or Wyner-Ziv decoder.

**Alternative applications**

The identifier can also be used to index the frames in a video sequence. Given a new sequence identifiers can be extracted from the frames and then searching can be performed to find the same sequence. This could be useful for copyright detection and sequence identification.

Multiple broadcasters often transmit the same content, for example advertisements or stock news footage. The identifier can be used to form links between the content for navigation between broadcasters.

Image identifiers provide the opportunity to link content through images. If a user is interested in a particular image on a web page then there is no effective way of finding other pages with the same image. The identifier could be used to provide a navigation route between images.

The identifier can be used to detect adverts in broadcast feeds. This can be used to provide automated monitoring for advertisers to track their campaigns.

There are many image databases in existence, from large commercial sets to small collections on a personal computer. Unless the databases are tightly controlled there will usually be duplicates of images in the sets, which requires unnecessary extra storage. The identifier can be used as a tool for removing or linking duplicate images in these datasets.

In this specification, the term "image" is used to describe an image unit, including after processing, such as filtering, changing resolution, upsampling, downsampling, but the term also applies to other similar terminology such as frame, field, picture, or sub-units or regions of an image, frame etc. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images. The image may be a greyscale or colour image, or another type of multi-spectral image, for example, IR, UV or other electromagnetic image, or an acoustic image etc.

In the embodiments, a frequency representation is derived using a Fourier transform, but a frequency representation can also be derived using other techniques such as a Haar transform. In the claims, the term Fourier transform is intended to cover variants such as DFT and FFT.

The invention is preferably implemented by processing electrical signals using a suitable apparatus.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

**References**

[1] Alexander Kadyrov and Maria Petrou, "The Trace Transform and Its Applications", IEEE Trans. PAMI, 23 (8), Aug., 2001, pp 811-828.

[2] Maria Petrou and Alexander Kadyrov, "Affine Invariant Features from the Trace Transform", IEEE Trans. on PAMI, 26 (1), Jan, 2004, pp 30-44.

As the skilled person will appreciate, many variations and modifications can be made to the described embodiments. For example, the present invention can be implemented in embodiments combining implementations of the existing and relating techniques, known to the skilled person. It is intended to include all such variations, modifications and equivalents to the described embodiments, that fall within the scope of the present invention, as defined in the accompanying claims.

**Claims**

1. A method of deriving a representation of an image by processing signals corresponding to the image, the method comprising:

   processing the image, or a two dimensional function of the image, to obtain a two dimensional function of the image at reduced resolution; and
   using the reduced resolution two dimensional function of the image to derive the representation of the image.

2. A method as claimed claim 1, wherein the step of processing the image, or a two dimensional function of the image, comprises sub-sampling values for the image over predetermined intervals of at least one parameter of the two dimensional function of the image.

3. A method as claimed in claim 2, wherein the sub sampling comprises performing a statistical calculation, preferably summation or integration, on values for the image or function of the image, over predetermined intervals of at least one parameter of the image or two dimensional function of the image.

4. A method as claimed in claim 1, 2 or 3, wherein the step of processing comprises processing the image using a set of lines in the image, for example, wherein the sets of lines correspond to one or more of: stripes defined by an interval of a first parameter of the two dimensional function of the image and double cones defined by an interval of a second parameter of the two dimensional function of the image, for example, wherein the processing comprises applying a functional over the set of lines to derive the reduced resolution two dimensional function of the image.

5. A method as claimed in claim 1, 2 or 3, wherein the step of processing comprises processing a two dimensional function of the image by sub- sampling values of the two dimensional function of the image over predetermined intervals of a first dimension thereof, to reduce the resolution of the two dimensional function of the image in the first dimension.

6. A method is claimed in claim 1, 2, 3 or 5, wherein the step of processing comprises processing a two dimensional function of the image by sub-sampling values of the two dimensional function of the image over predetermined intervals in a second dimension thereof, to reduce the resolution of the two dimensional function of the image in the second dimension.

7. A method as claimed in claim 5 or claim 6, wherein the two dimensional function of the image comprises a Trace transform of the image derived by applying a functional over all lines of the image, the two dimensional function defining values for the image in a Trace domain having distance and angle parameters.

8. A method as claimed in any preceding claim, wherein the step of using the reduced resolution two dimensional function of the image, to derive the representation of the image, comprises deriving a one-dimensional function of the image, for example, wherein the one dimensional function or further function is a circus function, or a function derived from a circus function.

9. A method as claimed in any preceding claim, further comprising:

   deriving a further function of the image, wherein the further function of a translated, scaled or rotated version of the image is a translated or scaled version of the further function of the image, for example, wherein the one dimensional function or further function is a circus function, or a function derived from a circus function.

10. A method as claimed in claim 8 or claim 9, wherein the step of using the reduced resolution two dimensional function of the image to derive the representation of the image comprises:

    using a plurality of frequency components of a frequency representation of the one dimensional function or further function to derive a representation of the image, for example, wherein the frequency components are determined using a Fourier transform or a Haar transform.

11. A method as claimed in claim 10, wherein the representation of the image is derived using the steps of:

calculating the magnitude, or logarithm of the magnitude, of a plurality of frequency coefficients, and determining a difference between the magnitude, or logarithm of the magnitude, of each coefficient and its subsequent coefficient, for example, further comprising:

applying a threshold to each determined difference to derive a series of binary values, wherein applying the threshold provides a binary value of 0 if a said difference is less than zero, and a binary value of 1 if a said difference is greater than or equal to zero, for example, wherein the image representation comprises the binary values defined by the magnitudes, or logarithm of magnitudes, of the plurality of frequency components.

12. A method as claimed in any preceding claim, wherein the method comprises deriving multiple representations of the image, by performing the step of processing over a range of different widths for said intervals, and combining the multiple representations to generate a multi-resolution representation, for example, wherein said different interval widths are at least a factor of two different from each other.

13. A method of identifying an image comprising:

deriving a representation of the image using a method as claimed in any preceding claim, and associating the representation with the image.

14. A method of comparing images comprising comparing representations of each image derived using the method of any preceding claim, optionally, wherein the comparison comprises determining a Hamming distance, optionally, comprising selecting images based on comparisons of representations.

15. Apparatus, or a computer-readable medium comprising instructions, for executing the method of any of claim 1 to 14, or use, including transmission, reception or processing, of a representation of an image derived using the method of any one of claims 1 to 12.

(a)

(b)

(c)

(d)

Figure 1

10110
11011
01010
11111
01010

Figure 2

**Figure 3**

1D Fourier transform coefficients, F(φ). *171*

Obtain the magnitude of the Fourier transform coefficients, |F(φ)|. *172*

Take the logarithm, log(|F(φ)|). *173*

Calculate the difference of subsequent coefficients. *174*

Take the sign of the difference, +=1, −=0. *175*

Binary identifier. *176*

Figure 4

Figure 5

(a)

(b)

(c)

Figure 6

| 200 Images | | 210 Image Storage | | Identifier 220 Extractor & Storage |
|---|---|---|---|---|

| 230 Image Database | | 240 Identifier Database |
|---|---|---|

| 250 Query Image | | 260 Identifier Extractor | | 270 Identifier Matching | | 280 Image Retrieval | | 290 Matched Images |
|---|---|---|---|---|---|---|---|---|

**Figure 7**

Figure 8

361

| 0 | 1 | 1 | ... | 0 |

362

| 1 | 0 | 1 | ... | 0 |

363

| 0 | 1 | 1 | ... | 0 | 1 | 0 | 1 | ... | 0 |

**Figure 9**

Figure 10

**Figure 11**

**Figure 12**

Figure 13

Europäisches
Patentamt

European
Patent Office

Office européen
des brevets

# EUROPEAN SEARCH REPORT

Application Number

EP 11 19 5008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUA YUAN ET AL: "A statistical approch for image feature extraction in the wavelet domain", IEEE; [CANADIAN CONFERENCE ON ELECTRICAL AND COMPUTER ENGINEERING], IEEE, INTERNET, vol. 2, 4 May 2003 (2003-05-04), pages 1159-1162, XP010654279, DOI: 10.1109/CCECE.2003.1226103 ISBN: 978-0-7803-7781-3 | 1-6, 12-15 | INV. G06K9/46 G06F17/30 |
| Y | * the whole document * | 10,11 | |
| X | KADYROV AND M PETROU A: "Object signatures invariant to affine distorsions derived from the Trace transform", IMAGE AND VISION COMPUTING, ELSEVIER, GUILDFORD, GB, vol. 21, 1 January 2003 (2003-01-01), pages 1135-1143, XP002495049, ISSN: 0262-8856, DOI: 10.1016/J.IMAVIS.2003.08.013 | 1,2,4, 7-9,15 | |
| Y | * page 1135 - page 1139 * | 10,11 | TECHNICAL FIELDS SEARCHED (IPC) |
| X | TABBONE ET AL: "A new shape descriptor defined on the Radon transform", COMPUTER VISION AND IMAGE UNDERSTANDING, ACADEMIC PRESS, SAN DIEGO, CA, US, vol. 102, no. 1, April 2006 (2006-04), pages 42-51, XP005311568, ISSN: 1077-3142 * abstract; figure 3 * * page 43, right-hand column, paragraph 2 - page 46, left-hand column, paragraph 5 * | 1-3,5-7, 10-15 | G06K G06F G06T |
| X | EP 1 498 848 A (SAMSUNG ELECTRONICS CO LTD [KR]) 19 January 2005 (2005-01-19) * paragraph [0016] * | 1-3,5-7, 10-15 | |

-/--

The present search report has been drawn up for all claims

| Place of search | Date of completion of the search | Examiner |
|---|---|---|
| Munich | 29 March 2012 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 11 19 5008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | PETROU M ET AL: "AFFINE INVARIANT FEATURES FROM THE TRACE TRANSFORM", IEEE TRANSACTIONS ON PATTERN ANALYSIS AND MACHINE INTELLIGENCE, IEEE SERVICE CENTER, LOS ALAMITOS, CA, US, vol. 26, no. 1, January 2004 (2004-01), pages 30-44, XP001185854, ISSN: 0162-8828 * abstract; table 9 * * page 31, right-hand column, paragraph 2 - page 32, right-hand column * * page 42, right-hand column * | 1,2,4, 7-9,15 | |
| X,D | KADYROV A ET AL: "THE TRACE TRANSFORM AND ITS APPLICATIONS", IEEE TRANSACTIONS ON PATTERN ANALYSIS AND MACHINE INTELLIGENCE, IEEE SERVICE CENTER, LOS ALAMITOS, CA, US, vol. 23, no. 8, August 2001 (2001-08), pages 811-828, XP001091621, ISSN: 0162-8828 * abstract; tables 1,3 * | 1-12 | |
| X | ROTH V: "Panel: content-based image indexing and retrieval with mobile agents", AGENT SYSTEMS AND APPLICATIONS, 1999 AND THIRD INTERNATIONAL SYMPOSIUM ON MOBILE AGENTS. PROCEEDINGS. FIRST INTERNATIONAL SYMPOSIUM ON PALM SPRINGS, CA, USA 3-6 OCT. 1999, LOS ALAMITOS, CA, USA,IEEE COMPUT. SOC, US, 3 October 1999 (1999-10-03), pages 260-261, XP010358578, ISBN: 0-7695-0342-X * page 260, right-hand column, line 4 - line 8 * | 1 | |

**TECHNICAL FIELDS SEARCHED (IPC)**

-----

-----

-----

-/--

The present search report has been drawn up for all claims

| Place of search | Date of completion of the search | Examiner |
|---|---|---|
| Munich | 29 March 2012 | Rockinger, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

| | Europäisches Patentamt European Patent Office Office européen des brevets | **EUROPEAN SEARCH REPORT** | Application Number EP 11 19 5008 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCLAUGHLIN R A: "Randomized Hough Transform: Improved ellipse detection with comparison", PATTERN RECOGNITION LETTERS, NORTH-HOLLAND PUBL. AMSTERDAM, NL, vol. 19, no. 3-4, March 1998 (1998-03), pages 299-305, XP004131792, ISSN: 0167-8655 * abstract * * page 305, right-hand column * ----- | 1-3,6 | |
| A | US 2002/028027 A1 (KOYAMA TOSHIYA [JP]) 7 March 2002 (2002-03-07) * abstract; figures 14a-14c,22,23 * ----- | 1-15 | |

| | | | **TECHNICAL FIELDS SEARCHED (IPC)** |

The present search report has been drawn up for all claims

| Place of search | Date of completion of the search | Examiner |
|---|---|---|
| Munich | 29 March 2012 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 19 5008

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2012

| Patent document cited in search report | | Publication date | Patent family member(s) | | Publication date |
|---|---|---|---|---|---|
| EP 1498848 | A | 19-01-2005 | EP 1498848 A2 | | 19-01-2005 |
| | | | JP 2005063418 A | | 10-03-2005 |
| US 2002028027 | A1 | 07-03-2002 | JP 4219542 B2 | | 04-02-2009 |
| | | | JP 2002084420 A | | 22-03-2002 |
| | | | US 2002028027 A1 | | 07-03-2002 |

**EP 2 450 833 A1**

**REFERENCES CITED IN THE DESCRIPTION**

**Patent documents cited in the description**

- EP 06255239 A

**Non-patent literature cited in the description**

- **ALEXANDER KADYROV ; MARIA PETROU.** The Trace Transform and its Applications. *IEEE Trans. PAMI,* August 2001, vol. 23 (8), 811-828
- **ALEXANDER KADYROV ; MARIA PETROU.** The Trace Transform and Its Applications. *IEEE Trans. PAMI,* August 2001, vol. 23 (8), 811-828
- **MARIA PETROU ; ALEXANDER KADYROV.** Affine Invariant Features from the Trace Transform. *IEEE Trans. on PAMI,* January 2004, vol. 26 (1), 30-44